# NEW EUROPEAN PATENT SPECIFICATION

(11) **EP 0 705 539 B2**
(45) Date of publication and mention of the opposition decision: **22.08.2007**
(45) Mention of the grant of the patent: 22.01.2003
(21) Application number: 95202695.3
(22) Date of filing: 06.10.1995
(51) Int. Cl.: A23C 11/04, A23C 9/13, A23C 9/152, A23C 19/05, A23C 9/154

(54) **A food for pregnant and lactating women**
Nahrungsmittel für schwangere und stillende Frauen
Produit alimentaire pour femmes enceintes et allaitantes

(30) Priority: 06.10.1994 NL 9401644
(43) Date of publication of application: 10.04.1996
(73) Proprietor: Friesland Brands B.V., 8937 AC Leeuwarden (NL)
(72) Inventor: Schaafsma, Anne, NL-8913 GL Leeuwarden (NL); Glas, Cornelis, NL-9255 KE Tietjerk (NL)
(74) Representative: Smulders, Theodorus A.H.J.

(56) References cited:
- EP-A- 0 183 305
- EP-A- 0 484 266
- EP-A- 0 504 055
- WO-A-94/02166
- WO-A-94/27628
- WO-A-95/26646
- CN-A- 1 078 097
- DE-A- 4 304 394
- FR-A- 2 053 703
- GB-A- 2 217 173
- US-A- 4 710 387
- US-A- 5 104 677
- US-A- 5 330 972
- DATABASE WPI Week 9122 Derwent Publications Ltd., London, GB; AN 91-159781 XP002020289 & JP-A-03 094 655 (OTSUKA PHARM KK)
- CHEMICAL ABSTRACTS, vol. 108, no. 22, 30 May 1988 Columbus, Ohio, US; abstract no. 188170, XP002020288 & JP-A-63 023 736 (MEIJI MILK PRODUCTS)
- PATENT ABSTRACTS OF JAPAN vol. 13, no. 286, 29 June 1989 & JP-A-01 080250 (SNOW BRAND MILK PROD)
- "Boots" fortified milk drink Mordern midwife,July 1994
- J.Farbe and M.Regitz,"Römpp Chemie Lexikon",Band 1(1989)Thieme Verlag, Stuttgart.
- A D'Almeida et al.;"Effects of a combination of evening primrose oil.." Women Health(1992(, vol.2-3,pp. 117-131
- P.M.Emmet et a.: "Dietary intake and sources of non-starch polysaccharide in English men and women",European J. Clinical Nutricion (1993),vol.47,pp.20-30
- Food composition and nutricion tables; ed.Deutsche Forschung- anstalt für Lebensmittelchemie,Garching b.München,6th revised completed ed., Scientific publ.Stuttgart 2000,pp.17-18
- M.Robefroid,"Dietary fiber,inulin and oligofructose,:a review comparing their physiological effects",Crit.Rev. in Foods Science and Nutricion(1993)vol.4,pp.793-802
- L.West et al.,"Diagnosis and management of irritable bowel syndrome,constipation, and diarrhea in pregnancy",Gastroenterol.Clin.North Am.(1992), vol.4,pp 793-802
- A.S. Anderson et al.,"dietary intake in pregnancy", Human Nutrition(1986),vol.40A,pp 40-48
- S.Yehuda et al.,"Modulation of learning,pain thresholds,and thermoregulation in the rat..",Proc.Natl.Acad.Sci.USA(1993),vol.90, pp.10345-10349
- The Shorter Oxford English Dictionary, Oxford University Press 1973,Ed.Ct Onions Volume I, p.1186;Volume II, p.1423
- Tomlin & Reid, 1998,Laxative properties of indigestible plastic particles; Br.Med.J.297,pp.1175-1176
- Pallotta et al.,1993,"Calcium polycarbophil in clinical practice. The therapy of constipation", Minerva Gastroenterol.Dietol.39;pp.175-178
- Lampe et al.,1992, "Gastrointestinal effects of modified guar gum and soy polysaccharide as part of an enteral formula diet, JPEN 16, pp.538-544
- Kapadia et al.,1995, "Influence of three different fiber- supplemented enteral diets on bowel function and short chain fatty acid production" JPEN 19,pp.63-68
- Slavin,1991,"Nutritional benefits of soy protein and soy fiber" J.Am.Diet.Assoc. 91,pp.816-819
- Fredstrom et al.,1991,Determination of the fiber content of enteral feedings, J:PGN 15,pp.450-453
- Effertz et al.,1991,"The effect of soy polysacharide on body weight,serum lipids, blood glucose, and fecal parameters in moderately obese adults", Nutrition Res.11,pp.849-859
- the Merck Index, 10th ed., 1983,p.2,3,260
- Gopal et al., 2000, "Oligosaccharides and glycoconjugates in bovine milk and colostrom",Br.J.Nutr.84,suppl. 1, S69-S74
- Neeser et al.,1991 "Quantitative determination of complex carbohydrates in bovine milk and in milk-based infant formulas", J.Dairy Sci. 74,pp.2860-2871
- Marlett,1992,"Content and composition of dietary fibre in 117 frequently consumed foods", J.Am.Diet.Ass.92(2),pp.175-186
- Hansen et al.,1993,"Effects of Cod liver oil on lipids and platelets in males and females"Eur.J.Clin.Nutr.47,pp.123-131
- Food composition and nutrition tables; ed.:Deutsche Forschunganstalt für Lebensmittelchemie, Garching b.München, 6th revised completed ed., Scientific publ.Stuttgart 2000, p.594
- Harris et al.,1993, "The effects of soluble-fiber polysaccharides on the adsorption of a hydrophobic carcinogen to an insoluble dietary fiber", Nutr.Cancer 19, pp.43-54
- cf.D9,pp. 835-836
- cf.D9,pp.39-40
- cf.D9,pp.406-407
- cf.D9,pp.1127-1128
- cf.D9,pp.153-154

## Description

This invention relates to a food specifically intended for pregnant and lactating women. This food is based on milk products.

The object of the present invention is to provide a food which optimally meets the nutritional needs of pregnant and lactating women as well as developing children from the point of view of a good health for mother and child. It is not an object of the invention to provide an alternative food to be administered to a baby or small child after birth.

In particular, the products according to the invention are intended to reduce the chances of systemic complications during pregnancy, as well as to contribute to optimum growth and brain development of the foetus or the infant.

It is well known that during pregnancy especially a good supply of polyunsaturated fatty acids of the type C₂₀ and C₂₂ is of importance. For instance, notably DHA (docosahexaenoic acid) and AA (arachidonic acid) are of importance for the brain development of the foetus in particular. Brain development takes place chiefly at the end of pregnancy. The above-mentioned polyunsaturated fatty acids of the type C₂₀ and C₂₂, are also designated by the term "long chain polyunsaturated fatty acids" (LCPs). Such LCPs can be derived in vivo from the unsaturated C₁₈ precursors linoleic acid and α-linolenic acid. In these biosyntheses use is made of enzymes of the types desaturase and elongase. For instance, γ-linolenic acid (GLA) and arachidonic acid (AA) result from linoleic acid, while eicosapentaenoic acid (EPA) and docosahexaenoic acid (DHA) result from α-linolenic acid.

During pregnancy, the foetus is fed via the umbilical cord with LCPs containing 20-22 C atoms, derived from linoleic acid and α-linolenic acid in the body of the mother. After birth, too, an infant is still dependent on the exogenous supply of LCPs for quite some time because the development of biosynthesis in the rapidly growing infant is still far from ideal.

European patent applications 0 140 805, 0 231 904 and 0 404 058, U.S. Patent 4,670,285 and Canadian patent specification 1 244 708 disclose milk products which have specifically been developed as a complete food for infants. The products in question are exclusively based on cow's milk ingredients and enriched with various LCPs. At least AA + DHA are present, while in addition meaning is given to the ratio AA/DHA. For an important part, these LCPs are derived from vegetable fats. In these known products the ratio of linoleic acid to α-linolenic acid is always greater than 7:1, in many cases even considerably greater. There is no focus on LCPs derived from α-linolenic acid. Only vitamin C and vitamin E are mentioned as physiologically active antioxidants.

The current dietary patterns of pregnant and lactating women lead to a relatively large intake of linoleic acid relative to α-linolenic acid. It appears that too high a ratio of linoleic acid to α-linolenic acid has an adverse effect on the biosynthesis of EPA and/or DHA. As a result, the foetus or the infant cannot take up an optimum amount of EPA and/or DHA.

According to the invention, it is endeavoured to overcome the problem in the biosynthesis of LCPs, which are derived from α-linolenic acid, in the body of a pregnant or lactating woman and thereby to optimise the uptake of these LCPs by the foetus or the infant.

The invention accordingly relates to a food based on milk products, intended for pregnant and lactating women, which food is specifically supplemented with DHA and EPA containing fats in the fatty fraction of said food based or milk products and soluble nutrient fibers selected from the group consisting of inulin, guar gum, carob bean gum and pectins, further comprising β-carotene, Vitamin E and Vitamin C, while in the fatty fraction the ratio of linoleic acid to α-linolenic acid is less than 4:1 and the sum of the amounts of linoleic acid plus α-linolenic acid exceeds 10% by weight, based on the weight of the fatty fraction.

In yet another aspect, the invention relates to the use of docosahexaenoic acid and eicosapentaenoic acid, in combination with vitamin E, vitamin C and β-carotene, and with a fatty fraction, wherein the ratio of linoleic acid to α-linolenic acid is less than 4:1 and the sum of the amount of linoleic acid plus α-linolenic acid exceeds 10% by weight of the fatty fraction in the preparation of a food for pregnant or lactating women to contribute to optimum growth and brain development of the foetus or the infant.

The food according to the invention is also intended to reduce the chances of (pre-)eclampsia during pregnancy. In particular, the invention provides for an optimal supply of fatty acids resulting from α-linolenic acid, which reduces the chances on (pre-)eclanipsia.

A further object contemplated is to obtain improved protection of the highly unsaturated fatty acids in the mother's body. In particular, there is an increased sensitivity to radicals in the direction of the highly unsaturated C₂₀₋₂₂ fatty acids which pass the foetus inter alia via the umbilical cord.

This improved protection is achieved by including in the products an ample amount of vitamin E, vitamin C as well as β-carotene. These compounds exhibit so-called scavenger action: they limit the formation of free radicals during pregnancy. Excessive free radical formation or unduly low scavenger action (antioxidant action) is associated inter alia with the development of (pre-)eclampsia due to an imbalance in the synthesis of relevant prostaglandins, prostacyclins.

When using the combination of vitamin E, vitamin C plus β-carotene, the scavenger action is ensured to a higher degree than is the case with the prior art.

European patent application 0 484 266 discloses an edible fatty mixture intended for small children and as a dietary product for adults. This fatty mixture is characterised by an oleic acid/linoleic acid/α-linolenic acid ratio in the ranges of 30-80/3-20/0.3-3, which ratio is said to correspond with that of mother's milk. Emphasis is laid on the relation AA/DHA. Al fatty mixtures contain MCT fats. Further, fatty mixtures which are better protected against radicals (vitamin E, vitamin C as well as β-carotene), are not illustrated, and certainly not as a food for pregnant and lactating women.

JP-04/341140 describes a product for pregnant or breast feeding women which focusses on a non-allergenic dairy product containing a milk protein hydrolysate. The hydrolysate applied is of a rather old-fashioned type resulting from treating the proteins with enzymes only. In accordance with the present invention, however, protein hydrolysates may be applied as one of the ingredients resulting from milk, which are treated with enzymes in combination with fractionation so as to reach a high content of di- and tripeptides and a low content of amino acids.

This protein hydrolysate has improved properties as compared with the hydrolysates applied in JP-04/341140 both for an optimal digestion as for reduced chances on allergic reactions. JP-04/341140 does not describe the LCP-antioxidant-system of the present invention.

In Voprosy Pitaniya No. 5, 1993, 28-31 a milk-based product is described for pregnant and lactating women wherein not anything is described in respect of the importance of the LCPs resulting from α-linolenic acid or the protection of these acids by the antioxidant system of the present invention. The prior art product contains the vegetable fat source maize butter. In order to prevent the absorption of radionuclids, strontium, caesium, lead and mercury, fibers can be incorporated.

An important problem often arising during pregnancy is constipation. For that reason, it is preferred that the food according to the invention further contains laxative soluble fibres, selected from the group consisting of inulin, guar gum, carob bean gum and pectins.

DE-A-43 04 394 describes a formulation for enterally feeding cancer patients. These compositions contain DHA and EPA.

GB 2 217 173 teaches nutritional and medicinal compositions in the form of an emulsion or a paste containing polyunsaturated oil providing at least one essential polyunsaturated acid and dietary fibre.

The food according to the invention is based on milk products. Suitable milk raw materials to be mentioned include whole milk, skimmed milk, cream, whey, buttermilk as well as derivatives derived therefrom. In this connection, particular mention is made of milk products of which a part of the lactic proteins has been replaced by protein hydrolysates. The addition of LCPs can be effected as an oil or in coated form. β-carotene as applied results from raw materials rich in β-carotene. It may be associated with lycopene, lutein and cryptoxanthin.

In a preferred embodiment, the food according to the invention has been brought into the form of a powdery product. This product may or may not have been rendered instant or granulated. The products according to the invention may also be liquid milk products. Further, the products may have a fermented character, such as yoghurt (beverages), or be products prepared to give a type of fresh-cheese.

The products according to the invention are also intended to provide for a permanently good calcium supply during pregnancy. In particular in the third trimester of pregnancy the need for calcium increases. The object contemplated is realised in that the milk products, in themselves already constituting a suitable source of calcium, are further enriched by including additional calcium from Ca-rich sources without this leading to an increase of constipations or of any instability in the product.

Suitable calcium sources are: CaCO₃, Ca(OH)₂, CaCl₂, Ca gluconate, Ca citrate, Ca lactate, Ca ascorbate, Ca malate, Ca glycerophosphate and Ca phosphate. These calcium sources are often added during the preparation of the products from a non-strongly ionic suspension. It is preferred that so many calcium ions are added as to give a Ca/P ratio greater than 1.5 in the food.

In order to contribute to a good iron supply during pregnancy and to prevent anaemia, the foods according to the invention can also contain sources supplying iron ions. It is moreover possible to add other micro-ingredients which are known to be necessary during pregnancy in particular, for example trace elements, minerals, and vitamins. Generally, the aim is for the food according to the invention to provide for the need for these micro-ingredients in an amount of 50% or more of the existing standards for these compounds.

To prevent allergic reactions, the milk proteins in the food according to the invention can be enzymatically hydrolysed and fractionated so as to reach a non-allergenic di- and tripeptid-rich hydrolysate. Also, with a view to this, specific components such as for instance arginine and γ-linolenic acid can be added.

Further, the products can be enriched with other sugars than sugars coming from the milk, viz. saccharose, glucose, and dextrins; as well as with vegetable proteins.

For the purpose of proper intake of the product, aroma and flavor can be added.

The invention will now be explained in more detail in and by the following examples.

### EXAMPLE I

A powdery product was prepared, consisting of :

| | |
|---|---|
| Water | 2.6% |
| Skimmed milk dry matter | 49.0% |
| Desalted whey dry matter | 20.2% |
| Whole milk powder | 5.8% |
| Vegetable fat (palm olein/rapeseed oil/LCP oil) | 9.5% |
| Lecithin | 0.2% |
| Soluble fibres (Fibruline®; containing inulin) | 7.5% |
| Citric acid | 1.1% |
| Calcium hydroxide | 0.6% |
| Minerals, trace elements, vitamins | 3.5% |

A composition was obtained as specified in Table I. The ratio of linoleic acid/α-linolenic acid is less than 4:1. The product contains 2.5 wt.% EPA and 1.5 wt.% DHA in the fatty fraction.

**Table I**

| | | Analysis per 100 g |
|---|---|---|
| Protein | g | 22.6 |
| Fat | g | 12.5 |
| Linoleic acid | mg | 1560 |
| α-Linolenic acid | mg | 400 |
| Carbohydrates | g | 55.7 |
| - Lactose | q | 48.2 |
| - Dietary fibres | g | 7.5 |
| Moisture | g | 3.0 |
| Minerals | g | 6.0 |
| Calcium | mg | 1000 |
| Phosphorus | mg | 620 |
| Ca/P ratio | | 1.6 |
| Iron | mg | 50 |
| Copper | µg | 970 |
| Sodium | mg | 265 |
| Potassium | mg | 940 |
| Chloride | mg | 570 |
| Magnesium | mg | 265 |
| Zinc | mg | 12.7 |
| Iodide | µg | 145 |
| Manganese | µg | 415 |
| Vitamins | | |
| A | µg RE (IU) | 667 (2220) |
| β-carotene | µg | 280 |
| D₃ | µg (IU) | 8.3 (332) |
| E | (IU) | 8.3 |
| K₁ | µg | 63.0 |
| B₁ | µg | 1250 |
| B₂ | µg | 1335 |
| Niacin NE | mg | 14.3 |
| B₆ | µg | 1835 |
| Folic acid | µg | 335 |
| Pantothenic acid | µg | 3300 |
| B12 | µg | 2.4 |
| Biotin | µg | 42.0 |
| C | mg | 58.0 |
| Energy value | kcal | 400 |
| | kJ | 1670 |

The mixture was prepared by mixing whole milk, skimmed milk, and desalted whey in liquid form with the vegetable fat and a suspension of calcium hydroxide and citric acid. After pasteurisation and homogenisation, this mixture was dried to a powdery half-finished product. The last-mentioned product was then finally mixed with the other minerals and trace elements, the vitamins and the Fibruline® on the post-drying bed of a drying tower, whereafter the powder was sprayed with lecithin to increase solubility. The obtained product is both hot- and cold-soluble.

### EXAMPLE II

A product was prepared in accordance with Example I, but the palmolein and rapeseed oil were replaced by exclusively rapeseed oil with a linoleic acid/α-linolenic acid ratio of 2.5:1.

### EXAMPLE III (NOT WITHIN THE SCOPE OF THE CLAIMS)

A product was prepared in accordance with Example I, but the fatty fraction now comprised 11.0 wt.% vegetable fat containing palmolein, rapeseed oil, palmkernel oil and soye oil (LA/LNA ratio 9:1) and 1.5 wt.% LCP fat in coated form, containing 20 wt.% EPA and 14 wt.% DHA. Whole milk powder was replaced by skim milk dry solids.

### EXAMPLE IV (NOT WITHIN THE SCOPE OF THE CLAIMS)

A product was prepared in accordance with Example III, but in addition 1 wt.% coated LCP fat was added containing 40 wt.% GLA.

### EXAMPLE V

A product was prepared in accordance with Example I, but the desalted whey dry matter was replaced by one part of whey protein hydrolysate dry matter (containing 80% converted protein (N x 6.3) and mainly di- and tripeptides) and 5 parts of lactose.

### EXAMPLE VI

A product was prepared in accordance with Example I, but the skimmed milk and whole milk powder dry matter was replaced by casein hydrolysate, lactose and milk fat in corresponding ratios, as far as the percentages of converted protein (N x 6.3), lactose and fat are concerned.

### EXAMPLE VII

A product was prepared having a composition corresponding in dry matter with the product of Example I. The Fibruline®, however, was replaced by pectin, the Ca(OH)₂ by CaCO₃, and the lecithin by vegetable fat.

First of all, a liquid was prepared with 16% dry matter, comprising a part of the components of the final composition, viz. the milk components and the vegetable fat. Thus, a so-called yoghurt milk was obtained. After homogenisation at 200 bar and 65°C, this yoghurt milk was subjected to a stand pasteurisation of 15 minutes at 85°C. After cooling to 36°C, starter culture concentrate "IST-NIZO" was added, followed by fermenting to pH 4.1 for 12 hours.

The thus prepared yoghurt was homogenised at 150 bar and cooled to 20°C, whereafter the other components were added from an aqueous suspension. The thus prepared product with 15% dry matter was homogenised twice at 20°C at 200 bar and after packaging was pasteurised for 10 minutes.

### EXAMPLE VIII

A concentrated milk liquid was prepared, consisting of:

| | |
|---|---|
| skimmed milk dry matter | 16.6% |
| whole milk dry matter | 1.6% |
| lactose | 2.8% |
| soluble fibres | 2.1% |
| vegetable fat | 2.7% |
| minerals, trace elements, vitamins | 1.5% |
| water | 72.7% |

The composition of the dry matter of this milk liquid was proportionally equal to that specified in Table I.

The mixture was prepared by mixing whole milk, skimmed milk, lactose and nutrient fibre in the proper proportions and concentrating this mixture to the proper dry matter content by in vacuo evaporation. In the last effect of the evaporator, the vegetable fat, with the fat-soluble vitamins added thereto, was added. The other vitamins, minerals, and trace elements were added to the concentrate. The milk liquid obtained was canned and subsequently sterilised.

## Claims

1. A food based on milk products, intended for pregnant and lactating women, which food is specifically supplemented with docosahexaenoic acid, eicosapentaenoic acid in the fatty fraction of said food based on milk products and soluble nutrient fibres selected from the group consisting of inulin, guar gum, carob beam gum and pectins, further comprising β-carotene, vitamin E and vitamin C, wherein the ratio of linoleic acid to α -linolenic acid in the fatty fraction is less than 4:1 and the sum of the amounts of linoleic acid plus α-linolenic acid in the fatty fraction is greater than 10%.

2. A food according to claim 1, which further contains γ-linolenic acid (GLA) and/or arginin.

3. A food according to any one of the preceding claims, wherein the Ca/P ratio is greater than 1.5.

4. A food according to any one of the preceding claims, wherein the milk product is derived from whole milk, skimmed milk, cream, whey, and/or buttermilk.

5. A food according to any one of the preceding claims, wherein the milk protein fraction consists wholly or partly of milk protein hydrolysate.

6. Use of docosahexaenoic acid and eicosapentaenoic acid, in combination with vitamin E, vitamin C and β-carotene, and with a fatty fraction, wherein the ratio of linoleic acid to α-linolenic acid is less than 4:1 and the sum of the amount of linoleic plus α-linoleic acid exceeds 10% by weight of the fatty fraction, in the preparation of a food for pregnant or lactating women to contribute to optimum growth and brain development of the foetus or the infant.

## Patentansprüche

1. Auf Milchprodukten basierendes Nahrungsmittel für schwangere und stillende Frauen, welches Nahrungsmittel speziell ergänzt ist mit Docosahexaensäure, Eicosapentaensäure in der Fettfraktion des auf Milchprodukten basierenden Nahrungsmittels und löslichen Nährfasern, ausgewählt aus der Gruppe bestehend aus Inulin, Guar-Mehl, Johannisbrotkernmehl und Pektinen, ferner enthaltend β-Carotin, Vitamin E und Vitamin C, worin das Verhältnis von Linolsäure zu α-Linolensäure weniger als 4:1 beträgt und die Summe der Mengen an Linolsäure plus α-Linolensäure in der Fettfraktion größer als 10 % ist.

2. Nahrungsmittel nach Anspruch 1, welches außerdem γ-Linolensäure (GLA) und/oder Arginin enthält.

3. Nahrungsmittel nach einem der vorangehenden Ansprüche, worin das Ca/P-Verhältnis größer als 1,5 ist.

4. Nahrungsmittel nach einem der vorangehenden Ansprüche, worin das Milchprodukt gewonnen ist aus Vollmilch, entrahmter Milch, Sahne, Molke und/oder Buttermilch.

5. Nahrungsmittel nach einem der vorangehenden Ansprüche, worin die Milchproteinfraktion ganz oder teilweise aus Milchproteinhydrolysat besteht.

6. Verwendung von Docosahexaensäure und Eicosapentaensäure, in Kombination mit Vitamin E, Vitamin C und β-Carotin und mit einer Fettfraktion, worin das Verhältnis von Linolsäure zu α-Linolensäure weniger als 4:1 beträgt und die Summe der Mengen an Linolsäure plus α-Linolensäure in der Fettfraktion größer als 10 % ist, in der Herstellung eines Arzneimittels für schwangere oder stillende Frauen, um zu optimalem Wachstum und Gehirnentwicklung des Fötus oder des Säuglings beizutragen.

## Revendications

1. Aliment à base de produits laitiers, destiné à des femmes enceintes et allaitantes, lequel aliment est complété de manière spécifique à l'aide d'acide docosahexaénoïque, d'acide eicosapentaénoïque dans la fraction graisseuse dudit aliment à base de produits laitiers et de fibres nutritives solubles sélectionnées parmi le groupe constitué d'insuline, gomme de guar, gomme de caroube et pectines, comportant de plus du β-carotène, vitamine E et vitamine C, où le rapport entre l'acide linoléique et l'acide α-linolénique dans la fraction graisseuse est inférieur à 4:1 et la somme des quantités d'acide linoléique plus acide α-linolénique dans la fraction graisseuse est supérieure à 10 %.

2. Aliment selon la revendication 1, qui contient de plus de l'acide γ-linolénique (GLA) et/ou de l'arginine.

3. Aliment selon l'une quelconque des revendications précédentes, dans lequel le rapport Ca/P est supérieur à 1,5.

4. Aliment selon l'une quelconque des revendications précédentes, dans lequel le produit laitier est dérivé de lait entier, lait écrémé, crème, lactosérum, et/ou babeurre.

5. Aliment selon l'une quelconque des revendications précédentes, dans lequel la fraction protéinée de lait est constituée totalement ou partiellement d'un hydrolysat protéiné de lait.

6. Utilisation d'acide docosahexaénoïque et d'acide eicosapentaénoïque, en combinaison avec une vitamine E, une vitamine C et un β-carotène, et avec une fraction graisseuse, dans laquelle le rapport entre l'acide linoléique et l'acide α-linolénique est inférieur à 4:1 et la somme de la quantité d'acide linoléique plus α-linolénique dépasse 10 % en poids de la fraction graisseuse, lors de la préparation d'un aliment pour des femmes enceintes ou allaitantes pour contribuer à la croissance et au développement cérébral optimum du foetus ou du nouveau-né.
